# EUROPEAN PATENT SPECIFICATION

(11) **EP 0 394 972 B1**
(45) Date of publication and mention of the grant of the patent: **11.08.1993**
(21) Application number: 90107784.2
(22) Date of filing: 24.04.1990
(51) Int. Cl.: G01D 5/34, F04B 43/08

(54) **Infusion pump with associated rotary encoder**
Infusionspumpe mit Drehkodierer
Pompe d'infusion avec codeur tournant

(30) Priority: 28.04.1989 JP 111230/89
(43) Date of publication of application: 31.10.1990
(73) Proprietor: SHARP KABUSHIKI KAISHA, Osaka (JP); BAXTER INTERNATIONAL INC., Deerfield, IL 60015 (US)
(72) Inventor: Goi, Nobuaki, Yamatokoriyama-shi, Nara-ken (JP); Bowman, George A., Illinois 60061 (US); Matthews, Joseph B., Illinois 60030 (US)
(74) Representative: TER MEER STEINMEISTER & PARTNER GbR

(56) References cited:
- EP-A- 0 066 636
- EP-A- 0 090 440
- DE-A- 2 948 182
- DE-A- 3 247 313
- US-A- 4 869 646
- PATENT ABSTRACTS OF JAPAN vol. 11, no. 126 (P-569)(2573) 21 April 1987, & JP-A-61 269018 (STANLEY ELECTRIC CO LTD) 28 November 1986,

## Description

### BACKGROUND OF THE INVENTION

The present invention relates to a parenteral solution infusion pump comprising: a stack of eccentric cam plates each of said cam plates integrated with a finger for controlling a flow of fluid through a piping; and a rotary encoder for controlling the pump so that the time of liquid transport and pulsating in the piping can be reduced; including a rotary plate having a plurality of primary slits defined therein in a circular row coaxial with an axis of rotation of the rotary plate, and a primary photoelectric detector including a source of light and a photo-sensor positioned one above the other with the circular row of the primary slits intervening therebetween.

EP-A-0 090 440 shows a none-pulsating intravenous pump including a disposable pump chamber and a pump housing. The disposable pump chamber has an inlet, an outlet and first and second flexible rolling diaphragm pumping chambers. First and second cylinders in the pump housing are positioned to receive the first and second flexible rolling diaphragms of the disposable pump chamber. First and second pistons are movable in the first and second cylinders, respectively. In addition, first and second valves are provided in the pump housing. The first valve controls fluid flow between the inlet and the first flexible rolling diaphragm pump chamber, while the second valve controls fluid flow between the first flexible rolling diaphragm pumping chamber and the second flexible rolling diaphragm pumping chamber. A motor and cam shaft drive the first and second pistons and the first and second valves. The first and second valves are controlled so that one valve is closed at all times, thereby providing fail safe operation of the pump. For direct indicating that cam shaft is rotating, there is an assembly of encoder wheel and encoder sensor.

DE-A-32 47 313 which supports the preamble of present claim, shows a intravenous peristaltic infusion pump with a stack of cam plates for controlling a flow through a piping. The pump further comprises a rotary encoder with a rotary plate having a plurality of slits defined therein and spaced an equal distance from each other in a direction circumferentially thereof. These slits are selectively sensed by a sensor during rotation of the rotary plate to determine the angle of rotation of the rotary plate in terms of the number of slits detected and also to determine the peripheral velocity of the rotary plate in terms of the number of slits detected for a given length of time. However, the detection of the peripheral velocity of the rotary plate is essentially such as to detect the angle of rotation from a position at which rotation of the rotary plate is initiated. The encoder is unable to detect the angle of rotation of the rotary plate from a specific reference angular position during the continued rotation of the rotary plate.

EP-A-0 066 636, Patent Abstract of Japan (JP-A-269018) and DE-A-29 48 182 show photoelectric rotary encoders comprising primary slits and reference slits for detecting the position of the rotary plate with very high accuracy.

### SUMMARY OF THE INVENTION

The present invention has been devised with a view to substantially eliminate the above discussed incapability inherent in the prior art pump and has for its essential object to provide an improved pump capable of detecting the angle or rotation of the rotary plate form the specific reference angular positon and capable of being manufactured in an economical and accurate way. It is a further object of the present invention to provide a infusion pump with a compact and small structure and a reliable function.

According to the present invention, there is provided a pump which is characterized in that the stack of eccentric cam plates is provided in a U-shaped housing, each finger extends beyond an open end of the U-shaped housing, the rotary encoder is mounted atop the housing, said rotary plate also has at heast one reference slit defined therein at a position radially of the circumlar row of the primary slits; and an auxiliary photoelectric detector is provided physically separate from said primary photoelectric detector and includes a source of light and a photo-sensor positioned one above the other with the path of travel of the reference slit intervening therebetween, the auxiliary photoelectric detector is sized to allow the auxiliary photoelectric detector to sense the reference slit.

### BRIEF DESCRIPTION OF THE DRAWINGS

This and other objects and features of the present invention will become clear from the following description taken in conjunction with a preferred embodiment thereof with reference to the accompanying drawings, in which:
Fig. 1 is a schematic side sectional view of an infusion pump;
Fig. 2 is a schematic top plan view of a rotary encoder used in the infusion pump according to a preferred embodiment of the present invention; and
Fig. 3 is a block circuit diagram showing a control system coupled with the rotary encoder.

### DETAILED DESCRIPTION OF THE EMBODIMENT

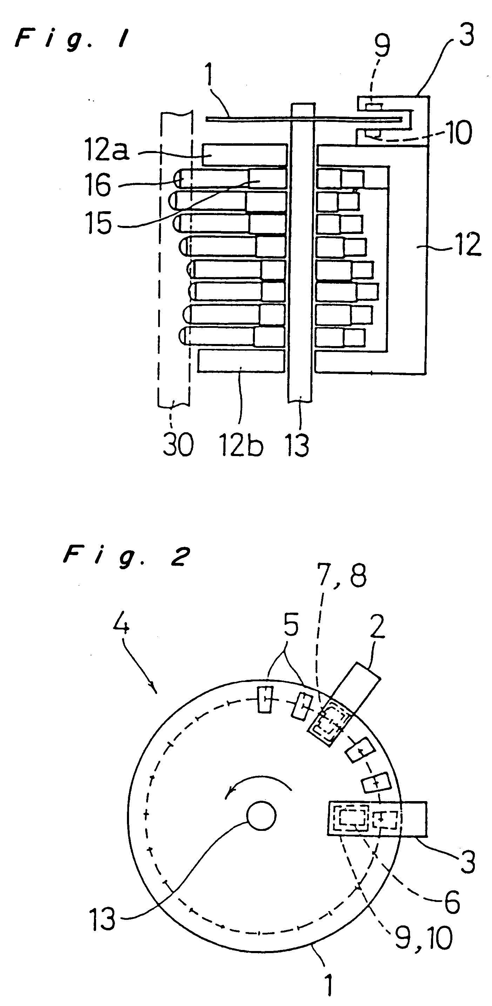

Referring to the drawings, particularly to Figs. 1 and 2, reference numeral 1 represents a rotary disc and reference numerals 2 and 3 represent primary and auxiliary photoelectric detectors, respectively. The rotary disc 1 and the first and second photoelectric detectors 2 and 3 altogether constitute a rotary encoder 4, which is used in a parenteral solution infusion pump.

The rotary disc 1 has its outer peripheral portion formed with a plurality of primary slits 5 defined therein in a circular row and in circumferentially equally spaced relationship with each other and also with at least one reference slit 6 defined at a position radially inwardly of the circular row of the primary slits 5. The primary photoelectric detector 2 comprises a source of light 7 and a photo-sensor 8 and is disposed with the light source 7 and the photo-sensor 8 positioned above and beneath the circular row of the primary slits 5, respectively. Similarly, the auxiliary photoelectric detector 3 comprises a source of light 9 and a photo-sensor 10 and is disposed with the light source 9 and the photo-sensor 10 positioned above and beneath the path of travel of the reference slit 6, respectively.

Both of the first and second photoelectric detectors 2 and 3 are mounted on and fixedly supported by a generally U-shaped housing 12 having upper and lower arms 12a and 12b connected together by means of a transverse body. A drive shaft 13 coupled at one end with a drive motor (not shown) and at the opposite end with the rotary disc 1 extends rotatably, but axially non-movably through the upper and lower arms 12a and 12b of the U-shaped housing 12. A stack of eccentric cam plates 15 is mounted on a portion of the drive shaft 13 situated between the upper and lower arms 12a and 12b of the housing for rotation together with the drive shaft 13, each of said eccentric cam plates 15 being integrated with a respective finger 16 which extends radially outwardly therefrom.

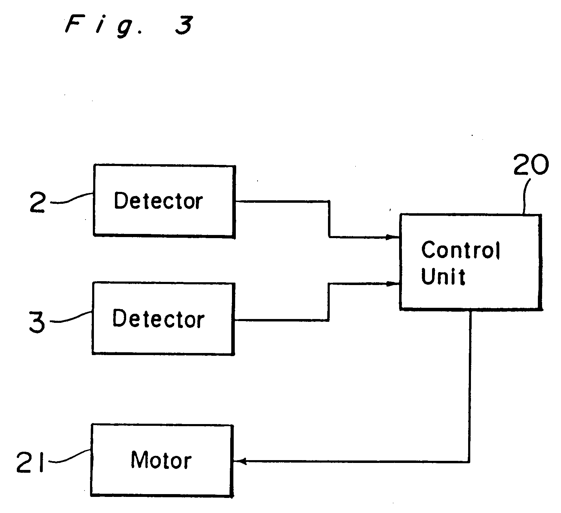

Referring now to Fig. 3 showing a block circuit diagram of a control system for the rotary encoder 4, a signal emerging from the primary photo-detector 2, which is indicative of the number of the primary slits 5 having traversed the path of light from the light source 7 towards the photo-sensor 8, and a signal emerging from the auxiliary photo-detector 3, which is indicative of the passage of the reference slit 6 across the path of light from the light source 9 towards the photo-sensor 10, are supplied to a control unit 20. The control unit 20 is so designed as to execute a predetermined control program in response to the application of the respective signals from the primary and auxiliary photo-detectors 2 and 3 thereto thereby to apply a drive signal to the motor 21 coupled with the drive shaft 13.

Hereinafter, the operation of the system shown in and described with reference to Figs. 1 and 2 will be described.

Reference numeral 30 shown in Fig. 1 represents a parenteral solution infusion piping having an upstream end fluid-coupled with an infusion bottle or bag and a downstream end fluid-coupled with a needle or catheter, a substantially intermediate portion of said infusion piping being held in position contactable with the fingers 16. More specifically, the substantially intermediate portion of the infusion piping is so positioned relative to the fingers 16 that, during the rotation of the drive shaft 13 in one direction with the fingers 16 consequently successively driven outwards to press the substantially intermediate portion of the infusion piping in the order from the uppermost or upstream one of the fingers 16 down to the lowermost or downstream one of the fingers 16, an infusion liquid within the infusion piping can be successively conveyed from an upstream side down to a downstream side in a pulsating fashion. In other words, the infusion pump shown in Fig. 1 is of a construction effective to cause that portion of the solution infusion piping 30 to undergo a linear peristaltic motion to transport the infusion liquid successively towards the needle or catheter and then into a vascular system, for example, a vein, of a patient.

The infusion pump of a type employing similar fingers adapted to be successively driven by associated cam members is well known to those skilled in the art and is disclosed in, for example, the Japanese Laid-open Utility Model Publication No. 60-163938, published October 31, 1985.

The infusion pump of the above described construction has a problem associated with the transportation of the infusion liquid through the infusion piping 30. Since the infusion liquid is transported in a pulsating fashion through that portion of the infusion piping 30, the amount of parenteral solution infusion liquid transported per stroke of each of the fingers 16 varies from the upstream side to the downstream side with respect to the direction of flow thereof towards the needle or catheter, with the minimum amount attained at the lowermost finger 16.

In view of the foregoing, the control unit 20 shown in Fig. 3 is so designed and so constructed as to execute the following sequence. Namely, the timing at which the uppermost finger 16 is driven to press the infusion piping 30 is controlled so as to match with the timing at which the auxiliary photo-detector 3 provides an output signal indicative of the passage of the reference slit 6 therethrough during the rotation of the rotary disc 1, while the number of output signals emerging from the primary photo-detector 2 and indicative of the number of the primary slits 5 detected thereby subsequent to the detection of the passage of the reference slit 6 past the auxiliary photo-detector 3 is counted. When the primary slits 5 having passed through the primary photo-detector 2 in a number corresponding to the angle of rotation of the rotary disc 1 during a period from the timing at which the uppermost finger 16 presses the infusion piping 30 until the timing at which one of the fingers 16 which is spaced two fingers from the lowermost finger 16, that is, the third finger 16 counted backwards from the lowermost finger 16, presses the infusion piping 30, are detected, a command necessary to increase the number of revolutions of the drive motor 21 is supplied to the motor 21 to accelerate a pressing action accomplished successively by the lowermost three fingers 16.

By the foregoing control performed in the practice of the present invention, the time during which the amount of the parenteral solution infusion liquid transported by the lowermost finger 16 is reduced can be advantageously shortened, thereby relieving a pulsating phenomenon of flow of the infusion liquid.

Thus, according to the present invention, the primary slits are successively detected by the primary photo-detector comprised of the light source and the photo-sensor while the reference slit is detected by the auxiliary photo-detector similarly comprised of the light source and the photo-detector. Therefore, with the utilization of the output signal from the auxiliary photo-detector indicating the passage of the reference slit as a reference, it is possible to detect the angle of rotation at any position on the path of rotation of the rotary plate.

Although the present invention has been fully described in connection with the preferred embodiment thereof with reference to the accompanying drawings, it is to be noted that various changes and modifications are apparent to those skilled in the art. By way of example, although the primary and auxiliary photo-detectors have been shown and described as used separate from each other, the both may be integrated together. When both detectors are integrated, a single light source may be employed for both of tee primary and auxiliary photo-detectors.

## Claims

1. A parenteral solution infusion pump comprising:
- a stack of eccentric cam plates (15) each of said cam plates (15) integrated with a finger (16) for controlling a flow of fluid through a piping (30); and
- a rotary encoder (4) for controlling the pump so that the time of liquid transport and pulsating in the piping (30) can be reduced; including
-- a rotary disc (1) having a plurality of primary slits (5) defined therein in a circular row coaxial with an axis of rotation of the rotary disc (1), and
-- a primary photoelectric detector (2) including a source of light (7) and a photo-sensor (8) positioned one above the other with the circular row of the primary slits (5) intervening therebetween;
**characterized in that**
- the stack of eccentric cam plates (15) is provided in a U-shaped housing (12),
- each finger extends radially beyond an open end of the U-shaped housing (12),
- the rotary encoder (4) is mounted atop the housing (12),
- said rotary disc (1) has a least one reference slit (6) defined therein at a position radially of the circular row of the primary slits (5); and
- an auxiliary photoelectric detector (3) is provided physically separate from said primary photoelectric detector (2) and includes a source of light (9) and a photo-sensor (10) positioned one above the other with the path of travel of the reference slit (6) intervening therebetween, the auxiliary photoelectric detector (3) is sized to allow the auxiliary photoelectric detector (3) to sense the reference slit (6).

## Patentansprüche

1. Parenterale Infusionspumpe mit
- einem Stapel von exzentrischen Nockenplatten (15), von denen jede einen integral damit verbundenen Finger (16) aufweist, zum Steuern des Durchflusses einer Flüssigkeit durch einen Schlauch (30); und
- einem Drehcodierer (4) zum Steuern der Pumpe, derart, daß die Zeit des Flüssigkeitstransports und das Pulsieren in dem Schlauch (30) vermindert werden; wobei der Drehcodierer enthält
-- eine drehbare Scheibe (1) mit einer Mehrzahl von ersten Schlitzen (5) in kreisförmiger, koaxial zur Rotationsachse der drehbaren Scheibe (1) angeordneter Reihe und
-- einen ersten fotoelektrischen Detektor (2), der übereinander angeordnet eine Lichtquelle (7) und einen Fotosensor (8) aufweist, wobei die kreisförmige Reihe der ersten Schlitze (5) sich zwischen der Lichtquelle (7) und dem Fotosensor (8) bewegt;
**dadurch gekennzeichnet,** daß
- der Stapel exzentrischer Nockenplatten (15) in einem U-förmigen Gehäuse (12) angeordnet ist;
- jeder Finger sich radial über das offene Ende des U-förmigen Gehäuses (12) hinaus erstreckt;
- der Drehcodierer (4) auf der Oberseite des Gehäuses (12) befestigt ist;
- die drehbare Scheibe (1) mindestens einen Referenzschlitz (6) aufweist, der in radialer Richtung der kreisförmigen Reihe der ersten Schlitze (5) positioniert ist; und
- ein physikalisch vom ersten fotoelektrischen Detektor (2) getrennter Hilfsfotodetektor (3) vorhanden ist, der übereinander angeordnet eine Lichtquelle (9) und einen Fotosensor (10) aufweist, wobei der Bewegungsweg des Referenzschlitzes (6) zwischen der Lichtquelle (9) und dem Fotosensor (10) liegt, und der Hilfsfotodetektor (3) so dimensioniert ist, daß er den Referenzschlitz (6) erfassen kann.

## Revendications

1. Pompe d'injection de solution par voie parentérale, comprenant :
- un empilage de cames plates à excentrique (15), chacune desdites cames plates (15) comportant un doigt d'un seul tenant (16) pour commander un débit de fluide dans un tuyau (30) ; et
- un codeur rotatif (4) pour commander la pompe de telle manière que la durée de l'acheminement du liquide et du mouvement pulsatoire dans le tuyau (30) puisse être réduite; comprenant
-- un disque rotatif (1) ayant une pluralité de fentes primaires (5) qui y sont définies en une rangée circulaire coaxiale par rapport à un axe de rotation du disque rotatif (1), et
-- un détecteur photo-électrique primaire (2) comprenant une source de lumière (7) et un photocapteur (8), disposés l'un au-dessus de l'autre, la rangée circulaire des fentes primaires (5) étant intercalée entre eux ;
caractérisée en ce que
- l'empilage de cames plates à excentrique (15) est placé dans un carter (12) en forme de U,
- chaque doigt s'étend radialement au-delà d'une extrémité ouverte du carter (12) en forme de U,
- le codeur rotatif (4) est monté sur le dessus du carter (12),
- ledit disque rotatif (1) a au moins une fente de référence (6) qui y est définie dans une position radiale par rapport à la rangée circulaire des fentes primaires (5) ; et
- un détecteur photo-électrique auxiliaire (3) est prévu physiquement distinct dudit détecteur photo-électrique primaire (2), et comprend une source de lumière (9) et un photocapteur (10) disposés l'un au-dessus de l'autre, le chemin de déplacement de la fente de référence (6) se trouvant situé entre eux, le détecteur photo-électrique auxiliaire (3) étant dimensionné de manière à permettre au détecteur photo-électrique auxiliaire (3) de détecter la fente de référence (6).
